# EUROPEAN PATENT SPECIFICATION

(11) **EP 4 366 891 B1**
(45) Date of publication and mention of the grant of the patent: **02.09.2026**
(21) Application number: 22808891.0
(22) Date of filing: 06.07.2022
(51) Int. Cl.: B09B 3/35, B09B 3/60

(54) **METHOD AND APPARATUS FOR WASTE PROCESSING OF MIXED WASTE**
VERFAHREN UND VORRICHTUNG ZUR BEHANDLUNG VON MISCHABFALL
PROCÉDÉ ET APPAREIL POUR LE TRAITEMENT DE DÉCHETS MÉLANGÉS

(30) Priority: 08.07.2021 SG 10202107532Y
(43) Date of publication of application: 15.05.2024
(73) Proprietor: 800 SUPER WASTE MANAGEMENT PTE LTD, Singapore 758056 (SG)
(72) Inventor: TAN, Wee Pheng Renee Mrs Renee Mison, SG 117755 (SG)
(74) Representative: Cremer & Cremer
(86) International application number: PCT/SG2022/050470
(87) International publication number: WO 2023/282850

(56) References cited:
- US-A1- 2017 253 891

## Description

The present invention relates to a method and an apparatus for waste processing of mixed waste comprising an organic compostable waste portion and an organic non-compostable waste portion, particularly for the processing of household waste. Especially, the present invention relates to a method and an apparatus for waste processing of mixed waste without pre-sorting or segregating the solid waste portions prior to waste processing.

### Technical Background

Over 2 billion metric tons of mixed waste, also designated solid waste or general waste, are generated by the world every year. Only 13.5 % of the solid waste is currently recycled. China, a long-standing recipient of the world's recycled plastics, has announced that most of the plastics received are too dirty thus causing them to stop their intake of such recyclable goods. The ineffectiveness of recycling is further exacerbated by behaviours that are slow to change, where the main reason why people avoid separating waste for recycling is inconvenience. Every day, densely populated regions like Singapore deal with voluminous amounts of general waste, consisting of unsegregated organic compostable waste such as food waste and organic and inorganic non-compostable waste such as plastics, glass and metals. The latter part of the mixed waste is recyclable, typically. Paper could be regarded as hybrid waste as small portions of paper present in compostable waste is compostable. However, large amounts of paper should be and are typically recycled.

For example, Singapore's current method of general waste disposal relies on large compactors which hold the waste until it can be transported to incineration plants. However, there are no on-site treatment options for general waste, so the compactors are usually at full capacity within a few days. Singapore also requires that organic compostable waste be treated promptly to avoid pests from breeding; this means it must be treated on-site or transported away. However, treating compostable/food waste on-site has been historically difficult due to the lack of waste segregation. Coupled with the garbage trucks which constantly move back and forth, a large amount of greenhouse gases is produced. Such a method of waste disposal is costly, inefficient and dangerous for our planet and its inhabitants.

Singapore is only the tip of the iceberg. There are many countries with much larger waste production that do not have the facilities to incinerate their waste. Singapore stated in 2019 that the Pulau Semakau landfill will be at full capacity by 2035. Soon, many other landfills across the globe will be unable to take more trash.

Moreover, general waste is often contaminated with food waste and vice versa. This is largely due to the lack of segregation at the source where the waste is generated from. Recyclable waste, such as paper, will be difficult to recycle once it is contaminated with contaminants such as food or oil. Similarly, food waste is often mixed with urban general waste, such as plastic straws, plastic packaging etc. This makes it challenging to recycle food waste due to the mechanics of the food waste recycling machine. To prevent these scenarios from happening, segregation at the source will have the largest impact. However, it will require discipline, and social and cultural shifts, which are difficult.

The traditional way of recycling food waste is to manually segregate food waste from the general or mixed waste, so that the segregated food waste can be further processed in a food waste digester or a composter without any contaminants. This labour intensive exercise of segregation often yields poor result for a digester or a composter to effectively treat the contaminated food waste. Not only that the system usually ends up with 20 wt.% - 40 wt.% of impurities that cannot be decomposed but the system will also break down because of too much impurities or end up with lots of impurities in the compost as the end result of a composter.

A variety of large waste processing plants are known, which process general waste, compost or other waste material. For example, in CN 101215490, a large plant-based management system is described that relies on the addition of coals and chemicals to ensure that the resultant product is combustible. In AU 2001097046, a waste processor comprises a shredder which shreds every waste into finely divided particulate material. US 4,203,376 discloses a waste treatment system which deals specifically with food waste in a large plant treatment manner. The food waste is combusted to gain a source of energy. However, none of these waste processing plants diminishes the above mentioned drawbacks.

US 2017/0253891 A1 discloses separation of different fractions of mixed municipal waste, namely at least wet organic waste and dry organic waste, defined by their moisture content. The fractions are handled separately and differently. Composting is described as a disadvantageous possibility of treating the wet organic waste part, merely. Anaerobic digestion or aerobic digestion by which biogas is produced are preferred techniques for treating the dry organics' part.

It is an object of the present invention to provide a method and an apparatus for waste processing of mixed waste that has a simple and compact set up, provides efficient waste processing, provides an environmentally beneficial process and useful outputs, abates greenhouse gas emissions and is cost-effective.

### Description of the Invention

These and other objects are fulfilled by a method for waste processing of mixed waste comprising an organic compostable waste portion and an organic non-compostable waste portion and an apparatus for waste processing of the mixed waste according to independent claims 1 and 12. Further, a system for waste processing of mixed waste is provided. Advantageous features and preferred embodiments of the invention are disclosed in dependent claims.

Herein the term mixed waste is to be understood as waste generated by human in private households or accumulating in offices or shopping malls or business complexes or commercial enterprises, or animal feed such as food for consumption, articles of daily life and other leftovers of human or animal life. The terms general waste and solid waste are used synonymously. Liquid waste such as excrements and residues of bathing/showering are not part of mixed waste according to the present understanding. The same applies to bulky waste such as furniture, scrap lumber, electronic scrap, old clothes, construction waste or, in bigger amounts, garden and horticulture waste. Industrial waste originating from manufacturing processes is not regarded as mixed waste. Also, problematic waste such as batteries should not be part of mixed waste accruing in a household.

The mixed waste could be regarded as comprising two main parts, an organic compostable waste portion and an organic non-compostable waste portion. Food waste is sometimes used as another word for the organic compostable part of the general waste. However, paper per se is also compostable. Thus, a small paper amount in the mixed waste would also be considered being part of the compostable waste portion. Although sometimes the organic non-compostable waste portion is also designated inorganic waste portion, the present preferred term takes a chemical discrimination. From a chemist viewpoint, plastics are organic compositions; the term "organic non-compostable waste portion" appears to be more precise. The organic non-compostable waste portion is distinguished from the inorganic non-compostable part of mixed waste such as glass or metals.

A method for waste processing of mixed or solid waste according to the present invention processes mixed waste comprising an organic compostable waste portion and an organic non-compostable waste portion. The waste processing method is particularly suitable to process household waste. The mixed waste may for example result from packaging, disposable dishes and utensils, consumer products, food preparation or production, and food leftovers. The food waste portion may for example comprise meat, bones, vegetables, fruit seeds (from durians, apples, oranges, avocados, etc.), fruits and vegetables skins and husks (such as coconut husks), sugar cane and horticulture waste. In general, the food waste portion represents an organic and compostable waste portion. The organic but non-compostable waste portion may for example comprise plastic bags, plastic products, packaging, wet wipes, Styrofoam boxes etc. Thus, the mixed waste can be both, a contaminated or an uncontaminated general waste that typically accrues in households, offices, restaurants, small businesses, etc.

According to the waste processing method, a load of mixed waste is filled into a shredder and shredded into smaller pieces than the initial size. Loading can be done manually, machine-supported or fully automatized. The shredded solid waste is transferred into a composting unit, such as a composting drum. Optionally, a series of composting units or composting drums can be provided, wherein the solid waste load successively passes through the composting units. Both portions - the food waste portion and the non-compostable waste portion - enter and pass through the composting unit or units at the same time. The food waste portion of the mixed waste load is composted in a microbial environment in the composting unit. Then the intermediate product, consisting of the mixed waste load treated in the composting unit, is transferred from the composting unit into a heating unit such as a heating drum. That means the composted food waste portion and the non-compostable waste portion enter the heating unit. In the heating drum the waste load treated in the composting drum is heated to a temperature higher than in the composting unit for drying the treated waste to a target moisture level lower than an initial moisture level. In the end, overall volume and mass of the mixed waste load treated in accordance with the invention are significantly reduced. When the target moisture level is reached the product is transported to an exit unit. After the waste processing, the product, i.e. the processed mixed waste load, consists of the shredded, composted and dried food waste portion and the shredded and dried organic non-compostable waste portion, which can easily be separated for further use such as recycling or incineration.

The waste processing apparatus is configured for processing mixed waste comprising an organic compostable waste portion and an organic non-compostable waste portion as described above. The waste processing apparatus comprises a shredder unit for shredding a load of solid waste, a composting unit such as a composting drum providing a microbial environment for composting the compostable part of the solid waste load, a heating drum providing a heating environment for heating the waste from the composting unit to a temperature higher than in the composting unit, at least one control unit for controlling a moisture level of the solid waste load in the heating unit and/or in the composting unit, and at least one means for transferring the mixed waste intermediate product from the composting unit to the heating unit such as a conveyor means for transporting the waste treated in the composting unit to the heating unit. Further, another means for transferring the solid waste from the shredding unit to the composting unit and/or from the heating unit to an exit unit may be present. Examples for such means are conveyor means such as conveyor belts or screw conveyors.

The method and apparatus for solid waste processing according to the present invention provides an advanced biotechnology solution to ease waste operations with no segregation needed. This is a great advantage over conventional waste treatment as the compostable part is composted and can be separated from the non-compostable part, so the volume and mass of residual waste which needs to be incinerated, or further recycled, or landfilled is highly reduced. Further, the mixed waste can be treated on-site such as in apartment buildings. Block of buildings may install one or more of the apparatuses according to the invention so that the waste accrued in said block of buildings can be treated on-site. Such an on-site plant can be filled on a regular basis. One passage from loading to exiting the product takes ca. 24 hours. Thus, the apparatus can be filled every day with the mixed waste collected from the apartments within the block of buildings. The compostable part thereof will not smell and also vermin or pathogenic organisms are destroyed regularly. The non-composted part can advantageously be used as a Refuse Derived Fuel (RDF) as will be further explained below. Thus, a zero waste target can be achieved.

As briefly explained in the paragraph above, it is an advantage of the method and apparatus for solid waste processing according to the present invention that unlike large-scale industrial plants as known from the prior art, the method and apparatus can and is intended to work on a smaller scale, suitable for locations with space constraints, e.g. bin centres at residential areas, shopping malls, or business complexes. Further, most prior art systems are unable to grind and treat waste of different forms and sizes concurrently. The method and apparatus of the present invention comprises a grinder that is able to shred, crush and grind plastic packaging, paper, styrofoam boxes, coconut husks, meat, etc. concurrently, although the waste in this system does not need to be ground into a uniform size, the system is able to treat all forms of waste and reduce it for example to RDF and compost. Currently, a lot of greenhouse gases are emitted from the frequent transportation of food and general waste to incineration plants. To alleviate this problem, the method and apparatus for mixed waste processing according to the present invention reduces the volume of waste (e.g. 10 tons of mixed waste can be reduced to 2 tons). The processing of the solid waste reduces the frequency of transporting waste, especially food waste (which goes bad very quickly). Hence, lesser greenhouse gases are emitted by the transport of these waste materials.

In the preferred embodiment of the waste processing method according to the present invention, the target moisture level is at least below 50 wt.% of the initial moisture level. Target moisture level of the composted part of 30-40 wt.% and of the RDF part of maximally 15 wt.% have been found to be feasible. The waste processing apparatus may comprise moisture sensors in the heating drum and preferably also in the composting drum. The moisture sensor may provide moisture levels to the at least one control unit, which decides if the target moisture level has been reached. In this case, the treated solid waste load will be further transported by the conveyor unit to the next processing step.

In an embodiment of the waste processing method according to the present invention, a temperature in the composting unit is below 70 °C but above 30 °C, preferably above 50 °C. It was noted that a temperature of around 60 °C in the composting unit seems to be most favourable. It is clear to any expert that the temperature will depend on the microbes which are present or added for degrading the compostable waste portion as composting is a temperature sensitive process. Consequently, the expert would choose a temperature or temperature range which is advantageous for the microbial environment and results in fast composting and decomposition of the food waste portion. Advantageously, in the composting drum organic waste will be broken down through microbial process in the microbial environment at 60 °C and turn into compost.

The microbial environment reduces an initial volume of the solid waste load to less than 70 vol.% thereof, for example within about 24 hours or more. The microbial environment comprises for example microbes or a combination of microbes, which degrade the compostable waste portion to less than 25 vol.%, preferable to 15-20 vol.% of its initial volume within 24 hours. Although the microbes used in the composting drum cannot digest non-compostable organic material like plastics, the volume of such waste slowly reduces as heat is applied to treat the solid waste load. Therefore, for example the volume of the compostable waste is reduced to 15-20 vol.%, while the volume of the non-compostable waste such as plastic and paper will be reduced to 50-70 vol.%. Similarly the mass of the mixed waste is also reduced in view of the fact that water is removed.

The microbes are able to decompose the food waste and remove any decaying smell often emitted by rotting foodstuff. Instead, only CO₂ is released from this process of decomposition. The process and apparatus do not emit any foul smell during the decomposition process.

In a further embodiment of the waste processing method according to the present invention, a temperature in the heating drum is below 110 °C, particularly in the range of 80 °C to 100 °C. Thus, in the heating drum, the food waste portion and the non-compostable waste portion will go through a heat treatment at approximately 90 °C to reduce the moisture content. Preferably, the maximum temperature is capped at 110 °C, preferably at 100 °C. This is to prevent the plastic from melting and releasing toxic fumes on-site. In the heating step the non-compostable fraction of the waste, particularly plastics, becomes smaller, more compact and brittle. Consequently, it is significantly reduced from its original size leading to a significantly reduced volume of the waste treated in accordance with the invention in comparison to untreated waste of the same composition.

The waste processing apparatus preferably comprises temperature sensors measuring the temperatures in the composting unit and in the heating unit. If the temperatures were to go above 60 °C in the composting drum and above 100 °C in the heating drum, the in-built temperature sensor will alert the control unit and the automated software adjusts the temperature accordingly.

In a further example of the waste processing method and apparatus according to the present invention, a scale unit measures a mass (in kilograms) of the solid waste load to be loaded into the shredder. For example, the mixed waste load is provided in a regular household trash bin and loaded onto a load cell of the scale unit before the solid waste load enters the composting drum. The mass of the mixed waste load is reported to the control unit to control the amount of solid mixed entering the waste processing apparatus.

Weighing is useful as preferably further mixed waste load can be entered into the apparatus while a first solid waste load is still processed in the drums. In the most preferred embodiment, one apparatus can process solid waste in an overall capacity of ca. 1-100 tons (1.000 - 100.000 kg). Designing apparatuses apt for processing smaller or higher loads than the before is possible, depending on the site the apparatus is erected. Higher loads than the load the apparatus is designed for are prevented from entering the apparatus by the control unit. For example, higher loads can be divided into smaller loads that may be processed subsequently.

In yet a further alternative of the waste processing method and apparatus according to the present invention, a condensation system is arranged at the heating drum and preferably also at the composting drum, which is designed to extract condensation water from the heating unit and preferably also from the composting unit. The condensation system reduces the humidity in the two drums. This is to promote the drying of the compostable and the non-compostable waste portions in the drums, particularly in the heating drum, by reducing the humidity in the system, which in turn reduces the mass of the processed solid waste load. The condensation system collects clear water that can be removed from the apparatus for further use.

Another embodiment provides that the heat energy can be re-harnessed by directing the hot air from each drum back to itself.

It is further envisaged to divert hot air from both drums into the heating unit to retain the higher temperature of 90 °C.

In another variation of the waste processing method according to the present invention, the shredded, composted and dried solid waste load reaching the exit unit is separated into a compost portion and a non-compost portion. The separation can be done at the exit unit. In the alternative, the separation can be done at a centralized facility comprising a separation unit designed for separating the shredded, composted and dried solid waste load into a compost portion and a non-compost portion, and a pellet unit designed for pelletizing the non-compost portion as Refuse Derived Fuel. For example, the separation unit comprises a vibratory screening device to separate the compost portion and non-compost portion.

Advantageously, the non-compost portion can be pelletized as Refuse Derived Fuel for future use like incineration.

Instead of waste being discarded into landfills or being incinerated in its entirety, the waste processing method and apparatus according to the present invention allows the repurposing of solid waste into RDF and compost. In addition, the need for recycling and sorting prior to treatment of the waste is substantially reduced. The resultant compost can be used for agriculture and the RDF can be used as fuel.

In yet another embodiment of the waste processing method according to the present invention, inorganic non-compostable waste such as metal waste and/or glass waste is extracted from the mixed waste prior to loading the solid waste into the shredder. These waste materials are valuable resources for reuse and recycling.

In one embodiment of the waste processing apparatus according to the present invention, the at least one control unit is configured to control the mass of the solid waste load, the temperature in the composting drum, the temperature in the heating drum and/or the humidity in the heating drum. The control unit can be a computer. The control unit can be integrated into the apparatus or it can be externally connected to the apparatus for example by an electronic network system. The control unit may comprise software for automatically pursuing the waste processing method application chamber according to the invention.

The waste processing apparatus according to the present invention uses a small, compact and decentralised set-up to reduce the tonnage of waste at the source, separate from a centralized large plant system for handling waste.

In a preferred embodiment the apparatus according to the invention is small scale for erecting and using it decentralized, on-site at or near places where the mixed waste to be processed is generated, e.g. in apartment buildings, housing estates, office sites and/or sheltered accommodations. In contrast to large scale apparatuses the present invention can be used on-site, where the waste is generated, a feature that reduces transporting and thus CO₂ emission. After the mixed waste being reduced in mass and volume by passing through the inventive machinery there are less transporting capacities as well as frequencies to be invested in comparison with transporting the waste without the inventive treatment to central facilities such as garbage dumps, waste collection stations or waste incineration plants.

As understood herein, the term "small scale" means that the apparatus has dimensions of between 50% to 300% of maximally 4 meters in width, to maximally 5 meters in height, to maximally 12 meters in length. The required roller shutter opening of a typical Singapore Bin Centre is 4 meters (clear width) to 5 meters (clear height) and this requirement is applicable to bin centers housing roll-on roll-off refuse compactors/containers and other refuse storage systems that require haulage. If the bin centre is located within the building envelope or designed with a roof or shelter at the front, there should be sufficient clearance of at least 4 meters (clear width) x 5 meters (clear height) for the haulage of the roll-on roll-off refuse compactors/containers.

In the drawings one preferred embodiment of a construction for a preferred embodiment of an apparatus is depicted, the composting drum and the heating drum being arranged one behind the other. A screw conveyor is installed as the means for transferring the pre-treated waste from the composting unit to the heating unit.

In the alternative to the arrangement in series the composting unit and the heating unit are stacked one on top of the other, most preferably the composting unit on top of the heating unit. A single housing can be provided. Such a stacked arrangement has the advantage that if space constraints in the surface area are given at a certain site, the apparatus can be constructed upwards. Particularly, in bigger cities where land is expensive and spatial constraints are real. The mass that is processed in the composting unit after passing the shredding unit, shall be transferred to the heating unit which is below the composting unit. If the drums are stacked together, the door between them can be configured to open up for the mass from the composting unit to push through to the heating unit. Alternatively, there can be an internal conveyor belt to transport the mass from the first drum to the second drum. Following from this, the other elements of the apparatus according to the invention might need to be adapted to the amended construction, such as the shredding unit might need to be arranged in front of the stack of composting and heating unit instead of arranging it on top of the composting unit which is the case in the embodiment as shown in the drawings.

The system for waste processing of mixed waste according to the invention comprising an organic compostable waste portion and an organic non-compostable waste portion comprises at least two, preferably more than ten, apparatuses for waste processing according to the invention, a facility comprising a separation unit designed for separating the product into a compost and a non-compost portion and a pellet plant for pelletizing the non-compost portion to RDF. In a preferred embodiment the apparatuses are erected at various places throughout e.g. a city, each at a place where enough mixed waste is generated to economically run an apparatus. All products generated by all apparatuses are transported to a centralized place where the compost is separated from the rest and can be sold. The residual part, i.e. the non-compost part, can be recycled if the plastic part is clean enough. Mostly, however, it will be used as RDF. For that purpose it will be pelletized and the pellets can be sold. Thus, instead of having high costs for landfilling or exporting waste, the waste is transformed into useful products which can be sold and gather money. It should be noted that a further advantage is the reduction of CO₂ emissions from traffic because less transporting capacities will be needed in view of the reduced mass and volume of the product in comparison with the mixed waste load.

In summary, the waste processing method and apparatus according to the present invention do not require any waste segregation. The invention is accessible from home and is capable of transforming general waste, also named solid waste or mixed waste, into manageable and useful products. This method and apparatus are capable of effectively turning both contaminated & uncontaminated solid waste, and compostable organic waste into Refuse Derived Fuel (RDF), a new form of energy that can be channeled for industrial and domestic use. The waste processing method and apparatus revolutionize current waste-management measures that are labour, cost and space intensive, not to mention the vast amount of pollution effected from these methods. They help ease the burden on landfills and are a step towards a Zero Waste Target and a sustainable eco-system.

The waste processing method and apparatus according to the present invention provides several advantages. Food waste and general waste can be processed into organic compost and useful energy sources respectively. Automated aeration and temperature controls allow organic compost and contaminated waste to be further processed into RDF. Whilst one ongoing solid waste load is being processed, a next solid waste load can be added at the same time, allowing the apparatus to operate 24 hours a day. At the end of the process, organic compost and RDF can be segregated during the transportation within the apparatus, making it a compact system without compromising on the extraction of such useful resources. Metals and non-metals (including batteries) comprised in general waste can be sorted, extracted and redirected for separate handling and/or recovery.

### Description of the Drawings

An exemplary embodiment of the invention will be illustrated in the following drawings. The drawings show:

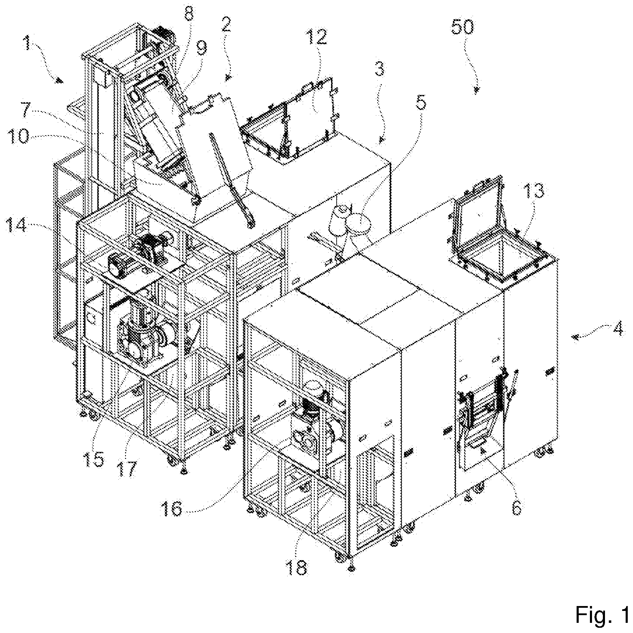

- Fig. 1:: a perspective view of a waste processing apparatus according to the present invention;

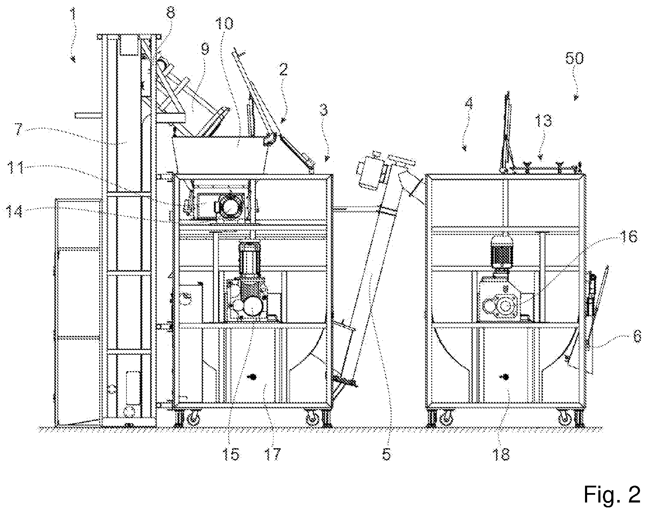

- Fig. 2:: a side view of the waste processing apparatus of Fig. 1; and

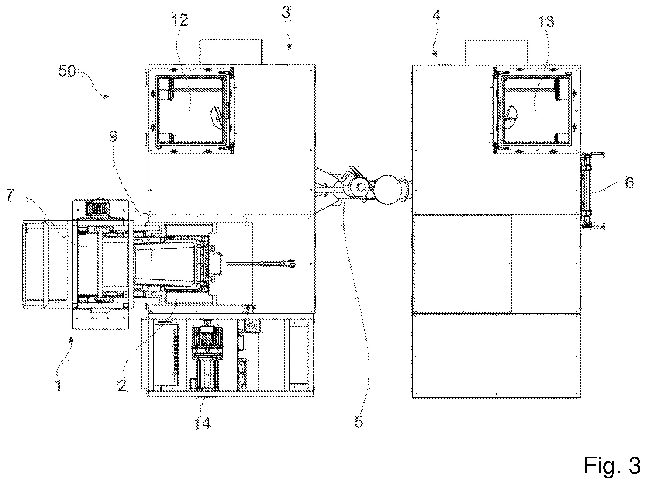

- Fig. 3:: a top view of the waste processing apparatus of Figs. 1 and 2.

The figures illustrate a preferred embodiment of an apparatus for waste processing 50. In the apparatus mixed waste, also designated in the following solid waste, comprising a compostable organic waste portion, also designated food waste portion, and an organic but non-compostable waste portion can be treated. The waste processing apparatus 50 comprises an input unit 1, a shredder unit 2, a composting unit 3, a heating unit 4, at least one control unit (not shown), a conveyor 5 and an exit unit 6.

The input unit 1 comprises a vertical lift tower 7 and a carrier 8, which is designed to travel up and down the lift tower 7. The carrier 8 can transport a solid waste load upwards to an input opening 10 of the shredder unit 2. The solid waste load can for example be provided in a garbage bin 9 which can be attached to the carrier 8 when the carrier is at a lower position and travel up with the lift tower 7 on the carrier 8. At an upper position the carrier 8 moves the garbage bin 9 towards the input opening 10 and causes the garbage bin 9 to turn upside down, which causes the solid waste load to fall into the input opening due to gravity. The empty garbage bin 9 can be turned back and travel down along the lift tower 7. The garbage bin 9 is then ready for further intake of waste.

A scale unit 11 comprising a load cell is provided as part of the shredder unit 2. In an alternative, it can be provided separately before the shredder unit, as part of the lift tower 7 or before inserting the garbage bin 9 into the lift tower. The scale unit 11 measures the mass of the mixed waste load to be processed and provides mass data the control unit (not shown).

After entering the shredder unit 2 the waste load is shredded. The shredder unit 2 shreds the mixed waste load into smaller pieces, which drops into the composting unit 3 arranged below the shredder unit 2.

In the preferred embodiment, the composting unit 3 is a drum. The drum is constantly or intermittently rotated by a motor 15 and thus mixing the material contained therein. This is favourable in that the waste is mixed with the composting microbes and it is at the same time aerated.

In the composting unit 3, the shredded mixed waste particles are exposed to a microbial environment and a suitable temperature, like 60 °C, for composting the compostable part of the solid waste load. The non-compostable waste portion is concomitantly in the composting unit 3. Thus, composting of the compostable waste fraction takes place irrespective of whether non-compostable waste is present or its percentage. Although, the organic non-compostable waste portion cannot be decomposed by the microbes, it is reduced in mass and volume due to evaporation caused by the temperature in the composting unit 3.

Next the intermediate product created in the composting unit consisting of the mixed waste load whose compostable fraction was composted is transferred to the heating unit 4 by the conveyor unit 5. The conveyor unit 5 can for example be a shaftless screw conveyor, which is connected to an exit of the composting unit 3 at its bottom and an input of the heating unit 4 at an upper area of the heating unit 4. The shredded and composted intermediate product is transported to the input of the heating unit 4, is released into the heating unit 4 and falls down by gravity.

The heating unit 4 is preferably a drum actuated by a motor 16. Similarly as a composting drum a rotating heating unit is advantageous in view of mingling and distributing the pretreated waste present in the heating unit. Revolving can be constantly or intermittently. Typically a low rotational speed is sufficient - also for the composting drum.

The heating unit 4 provides a heating environment for heating the waste to a temperature higher than in the composting drum. In the most preferred embodiment, the temperature in the heating unit 4 is about 100 °C, but not much higher to avoid creation of volatile harmful gases.

The relatively high temperature further raises the temperature of the pre-treated waste. Thereby, plastic materials contained therein shrink, this reduces the volume of the plastic waste. Also, any pathogens which might not have been killed in the composting unit 3 will be killed by the heat treatment in the heating unit 4.

A moisture sensor (not depicted) is arranged in the heating unit 4 for detecting the moisture therein. The moisture sensor provides moisture data to the control unit.

A moisture sensor might also be part of the composting unit 3.

Further, in a preferred embodiment, which is not depicted in the figures, a condensation system is installed in the composting unit 3 and the heating unit 4, which collects condensed water evaporated from the mixed waste load treated in both units. The condensation system may comprise a condensation sensor to collect information about the amount of condensed water withdrawn from the drums. The condensation sensor provides condensation data to the control unit, which can take the condensation into account when determining the target moisture level.

A target moisture level of the product is determined in advance and provided to the control unit. The target moisture level is determined so that the composted waste portion and the non-compostable waste portion are so dry that the product significantly loses mass and volume. In a preferred example a target moisture content of the waste for compost is 40 wt.%, even more preferred 30 wt.%, and that for the non-composted waste is 15 wt.% or below. When the target moisture level is reached the dried product could be withdrawn from the apparatus 50. The dried waste product is for example transported from the heating unit 4 to the exit unit 6, such as an outlet or any other discharge unit.

The product leaving the waste processing apparatus 50 comprises compost and non-composted waste. Moisture content and in consequence thereof, mass as well as volume of the product are greatly lowered in comparison with the mixed waste load which was entered into the waste processing apparatus 50.

The product can be segregated on-site or can be transported to a centralized facility having a separation unit designed for separating the shredded, composted and dried mixed waste load, i.e. the product, into a compost portion and a non-compost portion, and having a pellet unit designed for pelletizing the non-compost portion as refuse derived fuel.

In a preferred embodiment the control unit is configured to control the mass of the solid waste load, the temperature in the composting unit 3 or several composition units 3, the temperature in the heating unit 4, the condensation removal and the humidity in the heating unit 4. Taking into account the data provided by the various sensors present e.g. in the composting unit 3, the heating unit 4, in the conveyor 5 and/or the exit unit 6, the control unit actuates further input of a next solid waste load and the withdrawal of the product. It controls the temperature in the composting unit 3 to be suitable for the microbial environment and in the heating unit 4 to be suitable to reach the target moisture level without melting but still shrinking the plastic waste fraction.

The microbial environment can be established by any kind of microbes that are suitable to decompose organic material. It can be one type of microbes or it can be a mixture of microbes. Depending on typical components of the compostable waste portion of the solid waste load specific microbes can be used. In general, decomposition is carried out by heterotrophic micro flora and micro fauna comprising for example bacteria, fungi, actinomycetes and protozoa.

In an example of the waste processing method according to the present invention, an operator pushes the bin 9 which comprises a solid waste load on the carrier 8 in the lift tower 7 and closes a safety door. The operator presses a "Dump" push button, which activates the carrier 8 to travel up and dump the solid waste load onto the scale unit 11 which is in this embodiment arranged in front of the shredder unit 2. The scale unit 11 measures the solid waste load and tonnage will be recorded into the control unit. A hatch holding the solid waste load on the scale unit 11 will be opened and the solid waste load falls in the shredder unit 2, which is activated manually or by the control unit. All waste, the compostable waste as well as the non-compostable waste, will be crushed and shredded into smaller pieces and dropped into composting unit 3. In the composting unit 3, organic waste will be broken down by microbial activity at about 60 °C and turned into compost, reducing the organic waste by 15 wt.% to 20 wt.%. The residual waste such as plastic and paper will be reduced by 50 wt.% to 70 wt.%. It has to be noted that the paper may well be decomposed by the microbes, depending on the microbes as well as the amount of paper. Per se paper is compostable. After about 24 hours or more, the control unit will activate the conveyor unit 5 for transferring the intermediate product generated from the composting unit 3 to the heating unit 4 through the shaftless screw conveyor unit 5. In the heating unit 4, also the designated treatment drum, the compost and volume and mass-reduced non-compostable waste part will go through a heat treatment at approximately 90 °C to reduce the moisture content and shrink plastic particles. Once the moisture sensor detects that the moisture content in heating unit 4 reached the target moisture level, the program will activate the transferring of the end product, composted food waste portion and dried residual waste portion, via the exit unit 6 for example into a collection bin, that can be transferred to a centralized facility, where the composted waste portion and non-composted waste portion are segregated using a vibratory screening device. At the end of the process, there is the option to pelletize the dried inorganic waste portion into RDF pellets which can be sold for incineration.

The method and apparatus for waste processing according to the invention comprises a process flow for handling large amounts of solid waste (including organic/food and non-compostable general waste) without the need for any pre-sorting, but simply dumping a solid waste load into the inventive apparatus.

Using proprietary grinding or shredding technology, all types of waste including contaminated and uncontaminated solid waste (as defined) is ground down into small pieces. The waste is then transported/conveyed between the various drums within this apparatus. Optionally or if required, it is possible to provide preliminary sorting of various types of waste, especially that of metals and non-metals (including batteries). The reusable metals can then be extracted and redirected for separate handling and/or recovery. Similarly, the non-metals (including batteries) are redirected for separate handling and/or recovery.

As explained above the ground-up solid waste load is then processed in various units, typically drums. There can be more than one composting drum, wherein different composting drums may provide different microbial environments, each drum having a specific microbial combination to deal with different types of waste. By combining the specific microbial mixtures with its respective optimum range of temperatures, and holding the combined waste for pre-defined lengths of time, the microbial mix is able to degrade various components of the waste.

Advantages of the method and the apparatus according to the invention are:
- Organic and inorganic waste can be processed together without any segregation.
- Rapid conversion of compostable and non-compostable waste to compost and RDF within a ca. 24 hours process cycle.
- Environment-friendly process without offensive smell and secondary pollution.
- It can be customized according to the space given.
- User friendly with simple programmable logic controller (PLC) system.
- Highly automated and consistent process.
- Reduce carbon footprint by cutting down haulage frequency.
- Promote environment sustainability and moving towards a zero-waste nation.

### Reference Signs

| | |
|---|---|
| 1 | input unit |
| 2 | shredder unit |
| 3 | composting unit |
| 4 | heating unit |
| 5 | conveyor |
| 6 | exit unit |
| 7 | lift tower |
| 8 | carrier |
| 9 | garbage bin |
| 10 | input opening |
| 11 | scale unit |
| 12 | servicing manhole |
| 13 | servicing manhole |
| 14 | motor of the shredder unit |
| 15 | motor of the composting unit |
| 16 | motor of the heating unit |
| 17 | shaft of the composting unit |
| 18 | shaft of the heating unit |
| 50 | waste processing apparatus |

## Claims

1. Method for waste processing of mixed waste comprising an organic compostable waste portion and an organic non-compostable waste portion, comprising the steps of:
- shredding a load of the mixed waste in a shredder unit (2) thereby generating a shredded mixed waste load;
- transferring the shredded mixed waste load into a composting unit (3);
- composting the organic compostable waste portion of the shredded mixed waste load in a microbial environment in the composting unit (3) thereby generating a mixed waste intermediate product;
- transferring the mixed waste intermediate product from the composting unit (3) into a heating unit (4);
- heating the mixed waste intermediate product to a temperature higher than in the composting unit (3) for drying the mixed waste intermediate product to a target moisture level lower than an initial moisture level, thereby generating a product comprising compost and Refuse Derived Fuel; and
- transporting the product to an exit unit (6) when the target moisture level is reached, whereby the product transported to the exit has in comparison with the load of the mixed waste, a reduced moisture content, mass and volume.

2. Method for waste processing according to claim 1, wherein a temperature in the composting unit (3) is below 70 °C, preferably below 60 °C.

3. Method for waste processing according to claim 1 or 2, wherein a temperature in the heating unit (4) is below 110 °C, particularly in the range of 80 °C to 100 °C.

4. Method for waste processing according to any of the preceding claims, wherein a mass of the mixed waste to be loaded into the shredder unit (2) is determined.

5. Method for waste processing according to any of the preceding claims, wherein the microbial environment is created by adding to the composting unit (3) microbes which at least partially degrade the organic compostable waste portion of the mixed waste to compost.

6. Method according to claim 5, wherein the microbes degrade the organic compostable waste portion to less than 25 vol.% of its initial volume within 24 hours.

7. Method for waste processing according to claim 5 or 6, wherein the microbes reduce an initial volume of the mixed waste load to less than 70 vol.% of the initial volume.

8. Method for waste processing according to any of the preceding claims, wherein condensation water is withdrawn from the heating unit (4).

9. Method for waste processing according to any of the preceding claims, wherein the product is segregated into compost and Refuse Derived Fuel.

10. Method for waste processing according to claim 9, wherein the Refuse Derived Fuel is pelletized.

11. Method for waste processing according to any of the preceding claims, wherein the target moisture level is at least below 50 wt.% of the initial moisture level.

12. Apparatus for waste processing of mixed waste comprising an organic compostable waste portion and an organic non-compostable waste portion, the apparatus comprising:
- a shredder unit (2) for shredding a load of the mixed waste thereby generating a shredded mixed waste load;
- a composting unit (3) providing a microbial environment for composting the organic compostable waste portion of the shredded mixed waste load thereby generating a mixed waste intermediate product;
- a heating unit (4) providing a heating environment for heating the mixed waste intermediate product to a temperature higher than in the composting unit (3) thereby generating a product comprising compost and Refuse Derived Fuel;
- at least one control unit for controlling a moisture level of matter treated in the composting unit (3) and/or in the heating unit (4);
- an exit unit (6) from which the product can be withdrawn; and
- at least one means for transferring the mixed waste intermediate product from the composting unit (3) to the heating unit (4) such as a conveyor means (5).

13. Apparatus for waste processing according to claim 12, wherein a scale unit (11) is provided for determining a mass of the mixed waste load prior to loading into the shredder unit (2).

14. Apparatus for waste processing according to claim 12 or 13, wherein the at least one control unit is configured to control a mass of the mixed waste load, a temperature in the composting unit (3) and/or a temperature in the heating unit (4).

15. Apparatus for waste processing according to any of the claims 12 to 14, wherein a condensation system is arranged at least at the heating unit (4), which is designed to extract condensation water from the heating unit (4).

16. Apparatus for waste processing according to any of claims 12 to 15, wherein the composting unit (3) and the heating unit (4) are arranged in series, one after another.

17. Apparatus for waste processing according to any of claims 12 to 15, wherein the composting unit (3) is stacked on top of the heating unit (4).

18. Apparatus for waste processing according to any of claims 12 to 17, the apparatus being small scale for erecting and using it decentralized, on-site at or near a place where the mixed waste to be processed is generated, e. g. in apartment buildings, housing estates, office sites and/or sheltered accommodations.

19. System for waste processing of mixed waste comprising an organic compostable waste portion and an organic non-compostable waste portion, the system comprising at least two apparatuses for waste processing according to any of the preceding claims 12 to 15, a facility comprising a separation unit designed for separating the product into the compost and a non-compost portion, and a pellet plant for pelletizing the non-compost portion to the refuse derived fuel.

## Patentansprüche

1. Verfahren zur Abfallbehandlung von Mischabfall mit einem organischen kompostierbaren Abfallanteil und einem organischen nicht kompostierbaren Abfallanteil, umfassend die nachfolgenden Schritte:
- Zerkleinern einer Ladung an Mischabfall in einer Zerkleinerungseinheit (2), wodurch eine Ladung an zerkleinertem Mischabfall erzeugt wird;
- Überführen der Ladung an zerkleinertem Mischabfall in eine Kompostiereinheit (3);
- Kompostieren des organischen kompostierbaren Abfallanteils der Ladung an zerkleinertem Mischabfall in einer mikrobiellen Umgebung in der Kompostiereinheit (3), wodurch ein Mischabfall-Zwischenprodukt erzeugt wird;
- Überführen des Mischabfall-Zwischenproduktes aus der Kompostiereinheit (3) in eine Heizeinheit (4);
- Erhitzen des Mischabfall-Zwischenproduktes auf eine Temperatur, die höher ist als in der Kompostiereinheit (3), um das Mischabfall-Zwischenprodukt bis zu einem Zielfeuchtigkeitsgehalt zu trocknen, welcher niedriger als ein Ausgangsfeuchtigkeitsgehalt ist, wobei ein Produkt erzeugt wird, das Kompost und Ersatzbrennstoff umfasst; und
- Transportieren des Produktes zu einer Austragseinheit (6), wenn der Zielfeuchtigkeitsgehalt erreicht ist, wodurch das zu der Austragseinheit transportierte Produkt im Vergleich mit der Ladung an Mischabfall einen reduzierten Feuchtigkeitsgehalt, eine reduzierte Masse und ein reduziertes Volumen hat.

2. Verfahren zur Abfallbehandlung nach Patentanspruch 1, wobei eine Temperatur in der Kompostiereinheit (3) unter 70 °C, vorzugweise unter 60 °C, liegt.

3. Verfahren zur Abfallbehandlung nach Patentanspruch 1 oder 2, wobei eine Temperatur in der Heizeinheit (4) unter 110 °C, insbesondere in einem Bereich von 80 °C bis 100 °C, liegt.

4. Verfahren zur Abfallbehandlung nach einem der vorstehenden Patentansprüche, wobei eine Masse des in die Zerkleinerungseinheit (2) einzubringenden Mischabfalls bestimmt wird.

5. Verfahren zur Abfallbehandlung nach einem der vorstehenden Patentansprüche, wobei die mikrobielle Umgebung geschaffen wird durch Hinzufügen von Mikroorganismen zu der Kompostiereinheit (3), welche zumindest teilweise den organischen kompostierbaren Abfallanteil des Mischabfalls zu Kompost abbauen.

6. Verfahren nach Patentanspruch 5, wobei die Mikroorganismen den organischen kompostierbaren Abfallanteil zu weniger als 25 Vol.-% seines Ausgangsvolumens innerhalb von 24 Stunden abbauen.

7. Verfahren zur Abfallbehandlung nach Patentanspruch 5 oder 6, wobei die Mikroorganismen ein Ausgangsvolumen der Mischabfallladung zu weniger als 70 Vol.-% des Ausgangsvolumens reduzieren.

8. Verfahren zur Abfallbehandlung nach einem der vorstehenden Patentansprüche, wobei Kondensationswasser aus der Heizeinheit (4) abgeführt wird.

9. Verfahren zur Abfallbehandlung nach einem der vorstehenden Patentansprüche, wobei das Produkt aufgetrennt wird in Kompost und Ersatzbrennstoff.

10. Verfahren zur Abfallbehandlung nach Patentanspruch 9, wobei der Ersatzbrennstoff pelletiert wird.

11. Verfahren zur Abfallbehandlung nach einem der vorstehenden Patentansprüche, wobei der Zielfeuchtigkeitsgehalt mindestens unter 50 Gew.-% des Ausgangsfeuchtigkeitsgehalts liegt.

12. Anlage zur Abfallbehandlung von Mischabfall mit einem organischen kompostierbaren Abfallanteil und einem organischen nicht kompostierbaren Abfallanteil, wobei die Anlage Folgendes umfasst:
- eine Zerkleinerungseinheit (2) zum Zerkleinern einer Ladung an Mischabfall, wodurch eine Ladung an zerkleinertem Mischabfall erzeugt wird;
- eine Kompostiereinheit (3), welche eine mikrobielle Umgebung bereitstellt zum Kompostieren des organischen kompostierbaren Abfallanteils der Ladung an zerkleinertem Mischabfall, wodurch ein Mischabfall-Zwischenprodukt erzeugt wird;
- eine Heizeinheit (4), welche eine Heizumgebung bereitstellt zum Erhitzen des Mischabfall-Zwischenproduktes auf eine Temperatur, die höher ist als in der Kompostiereinheit (3), wobei ein Produkt erzeugt wird, das Kompost und Ersatzbrennstoff umfasst;
- mindestens eine Steuereinheit zur Regelung eines Feuchtigkeitsgehalts von in der Kompostiereinheit (3) und/oder in der Heizeinheit (4) behandeltem Material;
- eine Austragseinheit (6), aus welcher das Produkt entnommen werden kann; und
- wenigstens ein Mittel zum Überführen des Mischabfall-Zwischenproduktes aus der Kompostiereinheit (3) zu der Heizeinheit (4), wie zum Beispiel eine Fördervorrichtung (5).

13. Anlage zur Abfallbehandlung nach Patentanspruch 12, wobei eine Wiegeeinheit (11) vorgesehen ist zum Bestimmen einer Masse der Mischabfallladung vor dem Beladen in die Zerkleinerungseinheit (2).

14. Anlage zur Abfallbehandlung nach Patentanspruch 12 oder 13, wobei die wenigstens eine Steuereinheit ausgebildet ist, eine Masse der Mischabfallladung, eine Temperatur in der Kompostiereinheit (3) und/oder eine Temperatur in der Heizeinheit (4) zu regeln.

15. Anlage zur Abfallbehandlung nach einem der Patentansprüche 12 bis 14, wobei ein Kondensationssystem zumindest in der Heizeinheit (4) angeordnet ist, welche so ausgelegt ist, dass Kondensationswasser aus der Heizeinheit (4) abgezogen wird.

16. Anlage zur Abfallbehandlung nach einem der Patentansprüche 12 bis 15, wobei die Kompostiereinheit (3) und die Heizeinheit (4) hintereinander in Reihe angeordnet sind.

17. Anlage zur Abfallbehandlung nach einem der Patentansprüche 12 bis 15, wobei die Kompostiereinheit (3) auf der Heizeinheit (4) gestapelt ist.

18. Anlage zur Abfallbehandlung nach einem der Patentansprüche 12 bis 17, wobei die Anlage klein dimensioniert ist, so dass sie dezentral aufgestellt und betrieben werden kann, vor Ort oder in der Nähe einer Stelle, wo der zu behandelnde Mischabfall erzeugt wird, z. B. in Wohnblocks, Wohnsiedlungen, Bürokomplexen und/oder betreuten Wohnanlagen.

19. System zur Abfallbehandlung von Mischabfall mit einem organischen kompostierbaren Abfallanteil und einem organischen nicht kompostierbaren Abfallanteil, wobei das System wenigstens zwei Anlagen zur Abfallbehandlung nach einem der vorstehenden Patentansprüche 12 bis 15, eine Einrichtung mit einer Separiereinheit, die ausgelegt ist, das Produkt in den Kompostanteil und einen nichtkompostierbaren Anteil aufzutrennen, und eine Pelletieranlage zum Pelletieren des nichtkompostierbaren Anteils zu dem Ersatzbrennstoff umfasst.

## Revendications

1. Procédé pour le traitement des déchets mixtes comprenant une partie de déchets compostables organiques et une partie de déchets non compostables organiques, comprenant les étapes consistant à :
déchiqueter une charge de déchets mixtes dans une unité de déchiqueteuse (2) générant ainsi une charge de déchets mixtes déchiquetée ;
transférer la charge de déchets mixtes déchiquetée dans une unité de compostage (3) ;
composter la partie de déchets compostables organiques de la charge de déchets mixtes déchiquetée dans un environnement microbien dans l'unité de compostage (3) générant ainsi un produit intermédiaire issu des déchets mixtes ;
transférer le produit intermédiaire issu des déchets mixtes de l'unité de compostage (3) dans une unité de chauffage (4) ;
faire chauffer le produit intermédiaire issu des déchets mixtes à une température supérieure à celle qui existe à l'intérieur de l'unité de compostage (3) afin de faire sécher le produit intermédiaire issu des déchets mixtes jusqu'à un niveau d'humidité cible inférieur à un niveau d'humidité initial, générant ainsi un produit comprenant du compost et un combustible dérivé des déchets ; et
transporter le produit vers une unité de sortie (6) lorsque le niveau d'humidité cible est atteint, moyennant quoi le produit transporté vers la sortie a, par rapport à la charge de déchets mixtes, une teneur réduite en humidité, une masse et un volume.

2. Procédé pour le traitement des déchets selon la revendication 1, dans lequel une température dans l'unité de compostage (3) est inférieure à 70°C, de préférence inférieure à 60°C.

3. Procédé pour le traitement des déchets selon la revendication 1 ou 2, dans lequel une température dans l'unité de chauffage (4) est inférieure à 110°C, en particulier dans la plage de 80°C à 100°C.

4. Procédé pour le traitement des déchets selon l'une quelconque des revendications précédentes, dans lequel une masse des déchets mixtes à charger dans l'unité de déchiqueteuse (2) est déterminée.

5. Procédé pour le traitement des déchets selon l'une quelconque des revendications précédentes, dans lequel l'environnement microbien est créé en ajoutant à l'unité de compostage (3), des micro-organismes qui réduisent au moins partiellement, par dégradation, la partie de déchets compostables organiques des déchets mixtes en compost.

6. Procédé selon la revendication 5, dans lequel les micro-organismes réduisent, par dégradation, la partie de déchets organiques compostables à moins de 25 % de son volume initial en l'espace de 24 heures.

7. Procédé pour le traitement des déchets selon la revendication 5 ou 6, dans lequel les micro-organismes réduisent un volume initial de la charge de déchets mixtes à moins de 70% du volume initial.

8. Procédé pour le traitement des déchets selon l'une quelconque des revendications précédentes, dans lequel l'eau de condensation est évacuée de l'unité de chauffage (4).

9. Procédé pour le traitement des déchets selon l'une quelconque des revendications précédentes, dans lequel le produit est séparé en compost et en combustible dérivé des déchets.

10. Procédé pour le traitement des déchets selon la revendication 9, dans lequel le combustible dérivé des déchets est mis sous forme de granulés.

11. Procédé pour le traitement des déchets selon l'une quelconque des revendications précédentes, dans lequel le niveau d'humidité cible est au moins inférieur à 50% en poids du niveau d'humidité initial.

12. Appareil pour le traitement des déchets mixtes comprenant une partie de déchets compostables organiques et une partie de déchets non compostables organiques, l'appareil comprenant :
une unité de déchiqueteuse (2) pour déchiqueter une charge de déchets mixtes, générant ainsi une charge de déchets mixtes déchiquetée ;
une unité de compostage (3) fournissant un environnement microbien pour composter la partie de déchets compostables organiques de la charge de déchets mixtes déchiquetée, générant ainsi un produit intermédiaire issu des déchets mixtes ;
une unité de chauffage (4) fournissant un environnement de chauffage pour chauffer le produit intermédiaire issu des déchets mixtes à une température supérieure à celle qui existe à l'intérieur de l'unité de compostage (3), générant ainsi un produit comprenant du compost et du combustible dérivé des déchets ;
au moins une unité de contrôle pour contrôler un niveau d'humidité de matière traitée dans l'unité de compostage (3) et/ou dans l'unité de chauffage (4) ;
une unité de sortie (6) de laquelle le produit peut être retiré ; et
au moins un moyen pour transférer le produit intermédiaire issu des déchets mixtes de l'unité de compostage (3) à l'unité de chauffage (4), tel qu'un moyen de transporteur (5).

13. Appareil pour le traitement des déchets selon la revendication 12, dans lequel une unité d'échelle (11) est prévue pour déterminer une masse de la charge de déchets mixtes avant le chargement dans l'unité de déchiqueteuse (2).

14. Appareil pour le traitement des déchets selon la revendication 12 ou 13, dans lequel la au moins une unité de contrôle est configurée pour contrôler une masse de la charge de déchets mixtes, une température dans l'unité de compostage (3) et/ou une température dans l'unité de chauffage (4).

15. Appareil pour le traitement des déchets selon l'une quelconque des revendications 12 à 14, dans lequel un système de condensation est agencé au moins au niveau de l'unité de chauffage (4), qui est conçu pour extraire l'eau de condensation de l'unité de chauffage (4).

16. Appareil pour le traitement des déchets selon l'une quelconque des revendications 12 à 15, dans lequel l'unité de compostage (3) et l'unité de chauffage (4) sont agencées en série, l'une après l'autre.

17. Appareil pour le traitement des déchets selon l'une quelconque des revendications 12 à 15, dans lequel l'unité de compostage (3) est empilée sur le dessus de l'unité de chauffage (4).

18. Appareil pour le traitement des déchets selon l'une quelconque des revendications 12 à 17, l'appareil étant de petite taille de manière à pouvoir être installé et utilisé de façon décentralisée, sur site, à l'endroit où les déchets mixtes à traiter sont générés ou à proximité de celui-ci, par exemple dans des immeubles d'habitation, des ensembles résidentiels, des sites de bureaux et/ou des résidences assistées.

19. Système pour le traitement des déchets mixtes comprenant une partie de déchets compostables organiques et une partie de déchets non compostables organiques, le système comprenant au moins deux appareils pour le traitement des déchets selon l'une quelconque des revendications 12 à 15, une installation comprenant une unité de séparation conçue pour séparer le produit en compost et en une partie non compostable, et une installation de granulation destinée à mettre sous forme de granulés la partie non compostable afin d'obtenir le combustible dérivé des déchets.
